# EUROPÄISCHE PATENTANMELDUNG

(11) **EP 0 849 312 A1**
(43) Veröffentlichungstag der Anmeldung: **24.06.1998**
(21) Anmeldenummer: 97250373.4
(22) Anmeldetag: 16.12.1997
(51) Int. Cl.: C08J 11/08

(54) **Verfahren zur Gewinnung von Polyolefinen aus polyolefin-haltigen Kunststoff-Gemischen oder polyolefinhaltigen Abfällen**

(30) Priorität: 19.12.1996 DE 19653076
(71) Anmelder: Paraffinwerk Webau GmbH, 06679 Webau (DE)
(72) Erfinder: Utzig, Johann, Dr., 06112 Halle (DE); Salzmann, Joachim, Dipl.-Ing.Oek., 06667 Borau (DE)
(74) Vertreter: Börner, Horst

(57) **Zusammenfassung**

Die Erfindung betrifft ein Verfahren zur Gewinnung von fremdstofffreien, farb- und geruchlosen Polyolefinen aus polyolefinhaltigen Kunststoffgemischen oder polyolefinhaltigen Abfallen. Dabei werden die Gemische oder Abfalle mittels einer oberhalb 90 °C siedenden Kohlenwasserstofffraktion des Benzin- oder Dieselkraftstoffbereiches bei Temperaturen zwischen 90 °C und dem Siedebereich der Kohlenwasserstofffraktion extrahiert, anschließend die entstandene heiße primäre Polyolefinlösung nach Abtrennung des Extraktionsrückstandes mit Bleicherde und/oder Aktivkohle in intensiven Kontakt gebracht und nach Entfernung der mit Fremdstoffbestandteilen der Polyolefinlösung behafteten Bleicherde- und/oder Aktivkohlerückstände auf Temperaturen unter 70 °C gekühlt und das auskristallisierte Polyolefin isoliert.

## Beschreibung

Die Erfindung betrifft ein Verfahren zur Gewinnung von fremdstofffreien, farb- und geruchlosen Polyolefinen aus polyolefinhaltigen Kunststoffgemischen oder polyolefinhaltigen Abfällen, wie sie beispielsweise in der Recyclingwirtschaft anfallen.

In der modernen Industriegesellschaft werden in immer größerem Umfang Erzeugnisse aus Polyolefinen oder aus polyolefinhaltigen Kunststoffgemischen zum Einsatz gebracht, die nach ihrer Verwendung entweder einer werkstofflichen Wiederverwendung zugeführt oder rohstofflich zu gasförmigen, flüssigen oder festen Kohlenwasserstoffen aufgearbeitet werden. Dabei kommt der werkstofflichen Wiederverwendung durch geeignete Aufarbeitungsverfahren aufgrund höherer Wirtschaftlichkeit gegenüber einer rohstofflichen Verwertung vorrangige Bedeutung zu.

Bei der werkstofflichen Aufbereitung von polyolefinischen Kunststoff-Gemischen oder polyolefinischen Abfällen sind im wesentlichen zwei Wege bekannt geworden: Einerseits rein mechanische Verfahren, bei denen eine Trennung der Kunststoffe beispielsweise nach dem Schwimm-Sink-Verfahren erfolgt, oder andererseits Arbeitsverfahren, bei denen eine Trennung der Kunststofffraktionen mit Hilfe von Lösungsmitteln durchgeführt wird. Die Lösungsmittelverfahren haben in den letzten Jahren immer mehr an Bedeutung gewonnen, da mit ihrer Anwendung Kunststofffraktionen größerer Reinheit herstellbar sind als bei Anwendung rein mechanischer Verfahren. Im Stand der Technik sind dazu eine Reihe von Veröffentlichungen bekannt geworden, bei denen mit Hilfe von Lösungsmitteln unterschiedliche Kunststofffraktionen voneinander getrennt und mit unterschiedlicher Wirtschaftlichkeit mehr oder weniger sortenreine Kunststoffe erhalten werden.

So wird in der DE-OS 40 09 496 ein Verfahren zur Gewinnung von Kunststoffen und Werkstoffen nach erfolgter Trennung sortenrein aus Gemischen, Kombinationen und Verbunden von Kunststoffen mit Kunststoffen und/oder anderen Werkstoffen beschrieben, bei dem diese mit einem organischen Lösemittel behandelt werden, wobei ein oder mehrere Kunststoffe aufquellen oder Stoffe herausgelöst werden, wodurch eine Schrumpfung und somit eine Trennung eines Verbundes erfolgt. Gleichzeitig können andere Kunststoffe und/oder Verunreinigungen vom gleichen Lösungsmittel gelöst und getrennt aufbereitet werden.

In der DE-OS 41 01 578 wird ein Verfahren zur Aufbereitung von polyethylenhaltigem Material mittels eines Lösemittels, das gleichzeitig ein Fällungsmittel enthält, bei erhöhter Temperatur beschrieben. Das Lösungsmittel besteht dabei vorzugsweise aus chlorierten Kohlenwasserstoffen, die Lösetemperatur wird mit bis zu 373 K angegeben.

In der DE-PS 26 39 864 wird ein Verfahren zur Aufarbeitung eines Gemisches aus Hochpolymerabfällen, bestehend aus polyolefinischen, polystyrolischen, Polyvinylchlorid-, wärmehärtenden und natürlichen Hochpolymeren unter Fraktionierung aufgrund unterschiedlicher Löslichkeiten in verschiedenen organischen Lösungsmitteln beschrieben, bei dem jedes der verwendeten Lösungsmittel Wasser, einen Alkohol, eine anorganische Säure, eine organische Säure, eine anorganische Alkaliverbindung oder eine organische basische Verbindung, jeweils allein oder in Kombination zweier oder mehrerer dieser Verbindungen enthält.

Die DE-PS 42 14 527 beschreibt ein Verfahren zur Aufbereitung von Verpackungsmaterialien, die ein oder mehrere synthetische Polymere enthalten. Dabei wird der Polymeranteil in einem Lösungsmittel aus aliphatischen, naphthenischen oder aromatischen Kohlenwasserstoffen oder deren Mischungen, wie sie als Siedefraktion der primären und sekundären Erdölverarbeitung entstehen und deren Siedegrenzen zwischen 40 und 340 °C liegen, bei Temperaturen zwischen 0 und 340 °C unter Bildung eines flüssigen Gemisches aus Kohlenwasserstoffen unterschiedlicher Struktur und Molekülmasse gelöst und nicht lösliche Verpackungsbestandteile abgetrennt. Das anfallende flüssige Gemisch aus Lösungsmittel und gelösten Polymeranteilen sowie weiteren gelösten Verunreinigungen wird anschließend einer thermischen Spaltung zur Herstellung von Produkten mit Monomerencharakter unterzogen.

Die nach dem Stand der Technik bekannten Verfahren ermöglichen zwar die Auftrennung von Kunststoffgemischen in im wesentlichen sortenreine Fraktionen, mit ihrer Anwendung können jedoch aus polyolefinischen Abfällen keine hochreinen, fremdstofffreien und ungefärbten Polyolefine hergestellt werden. Bei der Verwendung von nach bekannten Verfahren hergestellten pulverförmigen Fraktionen beschränken die im Pulver verbleibenden Restanhaftungen der verwendeten Lösungsmittel die möglichen Einsatzgebiete für derartige Materialien. Die nach diesen Verfahren herstellbaren Polyolefinqualitäten stellen somit Produkte von verminderter Qualität dar. Ihre Einsatzgebiete sind entsprechend begrenzt. Die bekannten Verfahren sind in der praktischen Handhabung aufwendig und nur schwer umsetzbar, wodurch ihre Wirtschaftlichkeit in technischen Produktionsanlagen in Frage gestellt ist.

Es ist daher Aufgabe der vorliegenden Erfindung, ein Verfahren zu entwickeln, mit dem die Nachteile des Standes der Technik beseitigt und mit dem der Kunststoffrecyclingwirtschaft ein leicht auszuführendes und kostengünstiges Verfahren zur Herstellung fremdstofffreier, farb- und geruchloser Polyolefine, einschließlich geruchsfreier Polyolefinpulver mit breitestem Anwendungsspektrum aus polyolefinhaltigen Kunststoff-Gemischen und polyolefinhaltigen Abfallen zur Verfügung gestellt wird.

Erfindungsgemäß wird die Aufgabe durch ein Verfahren gelöst, bei dem polyolefinhaltige Kunstsoff-Gemische oder polyolefinhaltige Abfälle in einer ersten Verfahrensstufe mittels einer oberhalb 90 °C siedenden Kohlenwasserstofffraktion des Benzin- oder Dieselkraftstoffbereiches unter Erwärmen auf Temperaturen zwischen 90 °C und dem Siedebereich der Kohlenwasserstofffraktion extrahiert werden, in einer zweiten Verfahrensstufe die erhaltene heiße primäre Polyolefinlösung nach Abtrennung des Extraktionsrückstandes mit Bleicherde und/oder Aktivkohle in intensiven Kontakt gebracht wird und nach Entfernung der mit adsorbierten Fremdbestandteilen der primären Polyolefinlösung behafteten Bleicherde- und/oder Aktivkohlerückstände in einer dritten Verfahrensstufe auf Temperaturen unter 70 °C, vorzugsweise zwischen 10 und 30 °C, gekühlt und das dabei auskristallisierte Polyolefin abgetrennt wird. Das in der zweiten Verfahrensstufe anfallende Filtrat stellt eine wasserklare Polyolefinlösung dar, so daß das in der dritten Verfahrensstufe auskristallisierte Polyolefin als sortenreines, weißes Pulver mit hohem Reinheitsgrad erhalten wird.

Nach einer weiteren Verfahrensvariante wird die durch Extraktion in der ersten Verfahrensstufe erhaltene primäre Polyolefinlösung zunächst ohne Bleichmittelbehandlung gekühlt und das auskristallisierte Polyolefin abgeschieden. Das erhaltene Polyolefin besitzt technische Qualität und kann erfindungsgemäß unter Erwärmung oberhalb 90 °C in der Kohlenwasserstofffraktion gelöst und gemäß Anspruch 1 in der zweiten und dritten Verfahrensstufe weiterbehandelt werden.

Nach einem weiteren Merkmal der Erfindung können zur Herstellung von Polyolefin, das höchsten Reinheitsanforderungen genügen soll, eine oder mehrere weitere Verfahrensstufen hinzugefügt werden, in denen das in der dritten Verfahrensstufe anfallende Polyolefin weiteren Stufen zur Umkristallisierung und Bleicherde- und/oder Aktivkohlebehandlung analog Anspruch 2 unterzogen wird.

Das im Ergebnis des erfindungsgemäßen Verfahren erhaltene Polyolefinraffinat enthält in der Regel Lösungsmittelanteile, die nach weiteren Merkmalen der Erfindung entweder durch Erwärmung des Polyolefinpulvers auf Temperaturen oberhalb des Schmelzpunktes des Polyolefins und Konfektionierung des Polyolefins aus der Schmelze heraus oder durch Trocknung des Polyolefinpulvers bei Temperaturen unterhalb des Schmelzpunktes des Polyolefins unter Gewinnung des Polyolefins als feinkristallines Pulver entfernt werden. Als weitere Varianten zur Entfernung des anhaftenden Lösungsmittels haben sich das Verdampfen im Vakuum oder das Hindurchleiten eines Gasstromes durch den Polyolefinniederschlag jeweils bei Temperaturen unterhalb des Schmelzpunktes des Polyolefins als vorteilhaft erwiesen. Außerdem können neben noch vorhandenen Resten der als Lösungsmittel verwendeten Kohlenwasserstofffraktion gegebenenfalls in das Polyolefin mitgeschleppte Anteile von keton- oder alkohollöslichen Fremdstoffen durch Extraktion mit einem unterhalb des Schmelzpunktes des Polyolefins siedenden Keton oder Alkohol entfernt werden.

Als besonders vorteilhaft für die Qualität des herzustellenden Polyolefins hat sich erwiesen, das polyolefinhaltige Ausgangsmaterial vor der extraktiven Wärmebehandlung nach Anspruch 1 einer Vorwäsche mit der vorgeschlagenen Kohlenwasserstofffraktion bei Temperaturen zwischen 10 und 70 °C zu unterziehen und das gewaschene Material vom dabei verunreinigten Lösungsmittel abzutrennen. Dabei ist es nach einem weiteren Merkmal der Erfindung zweckmäßig, das Lösungsmittel durch die einzelnen Verfahrensstufen im Gegenstrom zu führen, beginnend mit frischem Lösungsmittel in der letzten Stufe der Umkristallisation nach Anspruch 1 oder 2 bis hin zur Vorwäsche nach Anspruch 9, wodurch eine besonders vorteilhafte Wirtschaftlichkeit des erfindungsgemäßen Verfahrens erreicht wird.

Die vorliegende Erfindung gestattet neben der Herstellung von technischen Polyolefinen aus der ersten Verfahrensstufe und weitgehend reiner Polyolefine aus der dritten Verfahrensstufe infolge der Möglichkeit beliebig wiederholbarer Umkristallisations- und adsorptiver Raffinationsprozesse mit Bleicherde und/oder Aktivkohle die Herstellung von Polyolefinen höchster Reinheit aus polyolefinhaltigen Kunststoff-Gemischen oder polyolefinhaltigen Abfällen, wie sie beispielsweise in der Recyclingwirtschaft anfallen und die werkstofflich in dieser Form nicht einsetzbar sind. Aus dem Herstellungsprozeß der Polyolefine eingebrachte Katalysatorreste oder Stabilisatoren sowie aus dem Gebrauch der Polyolefine in diesen enthaltene Abbauprodukte werden durch das erfindungsgemäße Verfahren abgeschieden, wodurch bei entsprechender Verfahrensführung ein Reinheitsgrad der Polyolefine erzielt werden kann, der dem von Neuware entspricht oder diesen sogar übertreffen kann. Die Erfindung ist aufgrund ihrer einfachen Verfahrensweise und der preiswerten Einsatzstoffe wirtschaftlich großtechnisch umsetzbar.

Die Erfindung wird an drei Ausführungsbeispielen näher erläutert.

### Beispiel 1:

20 g eines Materials, das durch Zerkleinerung von gebrauchten Pflanzenschutzmittel- und Chemikalienverpackungen aus der gewerblichen Sammlung gewonnen worden war und das einen starken Geruch nach Pflanzenschutzmitteln aufwies, wurde mit 400 g handelsüblichem Testbenzin versetzt und 24 Stunden unter gelegentlichem Umrühren bei Zimmertemperatur stehengelassen. Danach wurde die Mischung durch Abdekantieren getrennt. Die Kunststofffraktion wurde erneut mit 400 g Testbenzin versetzt. Das Gemisch wurde im Glaskolben auf 140 °C erhitzt, 90 Minuten bei dieser Temperatur am Rückfluß gekocht und anschließend heiß filtriert. Auf dem Filter verblieben 0,3 g an ungelösten Rückständen. Das Filtrat wurde auf Raumtemperatur abgekühlt, danach wurden die ausgeflockten. Polyolefine abfiltriert. Aus dem Filtrat wurden durch Abdestillieren 0,5 g eines dunklen, pastösen Rückstandes isoliert. Der dunkelgrün gefärbte Filterkuchen wurde mit 800 g Testbenzin unter Erwärmen auf 140 °C gelöst, nach Zusatz von 2 g Bleicherde 30 Minuten am Rückfluß gekocht und anschließend bei ca. 100 °C filtriert. Dabei wurde ein farbloses Filtrat gewonnen, aus dem sich beim Abkühlen die Polyolefine als feinkörniger Niederschlag abschieden. Der durch Filtration gewonnenen Filterkuchen wurde zunächst im Vakuum bei 20 °C von der Hauptmenge des anhaftenden Lösemittels befreit. Das feinpulvrige Polyolefin wies noch einen deutlichen Geruch nach Testbenzin auf. Durch eine 1/2-stündige Extraktion mit Aceton unter Verwendung einer Soxleth-Apparatur wurden die Restspuren an Testbenzin entfernt. Nach Abtrennung des Acetons durch Vakuumtrocknung bei 20 °C wurde ein weißes geruchloses Pulver gewonnen,.das keine erkennbaren Verunreinigungen mehr enthielt.

### Beispiel 2:

Für diese Versuche wurde ein aus der Sammlung des Dualen Systems Deutschland stammendes Agglomerat einer Mischfraktion eingesetzt, das bei der Prüfung nach der Schwimm-Sink-Methode einen Anteil von ca. 70 % Polyolefinen (ermittelt als Anteil Schwimmfraktion) aufwies.

20 g des DSD-Agglomerates wurden mit 400 g Testbenzin versetzt, 2 Stunden bei 130 °C unter Rühren behandelt und anschließend bei ca. 100 °C filtriert. Als Extraktionsrückstand verblieben auf dem Filter ca. 4,5 g eines faserreichen Materials. Das bräunlich gefärbte Filtrat wurde auf Raumtemperatur gekühlt, wobei sich die Polyolefine als dunkel gefärbtes kristallartiges Material absetzten. Nach dem Abfiltrieren des Polyolefinniederschlages wurden aus dem Filtrat durch Abdestillieren ca. 2,5 g eines pastösen Rückstandes isoliert. Der Polyolefinfilterkuchen wurde nach Zugabe von 300 g Testbenzin durch Erhitzen auf 130 °C erneut gelöst. Die Lösung wurde im Gemisch mit 2 g Bleicherde 30 Minuten bei dieser Temperatur intensiv gerührt und anschließend bei ca. 100 °C filtriert. Dabei wurde ein farbloses Filtrat gewonnen, aus dem sich beim Abkühlen die Polyolefine als feinkörniger Niederschlag abschieden. Der durch Filtration gewonnene Filterkuchen wurde wie in Beispiel 1 beschrieben weiterbehandelt. Es wurde ein reinweißes Polyolefinpulver gewonnen, das beim probeweisen Erhitzen auf 150 °C eine nahezu farblose Schmelze ergab.

### Beispiel 3:

10 g einer mehrfarbig bedruckten Polyethylen-Polyamid-Verbundfolie für die Käseverpackung wurden in ca. 3 x 3 cm große Folienschnitzel zerkleinert, in eine übliche Soxleth-Extraktionsapparatur eingebracht und mit einer aus einer DK-Fraktion hergestellten Normalparaffinfraktion (Parex-Paraffin) mit einem Siedebeginn von ca. 180 °C extrahiert. In der Extraktionshülse verblieben 5,5 g Polyamidanteil einschließlich des überwiegenden Anteils der Bedruckung. Die entstandene grüngefärbte Polyethylenlösung wurde mit 0,5 g Bleicherde und 0,5 g Aktivkohle versetzt, 30 Minuten bei 120 °C gerührt und anschließend bei ca. 100 °C filtriert. Nach Abkühlung des farblosen Filtrates auf Raumtemperatur wurde der ausgefallene Polyethylenniederschlag abfiltriert und durch Vakuumtrocknung bei 50 °C weitgehend vom Lösungsmittel befreit. Das noch deutlich nach dem Lösungsmittel riechende Pulver wurde durch eine 2-stufige Behandlung mit je 50 g Aceton bei Raumtemperatur und anschließender Entfernung des Acetons durch Vakuumtrocknung bei 20 °C in ein geruchsfreies Produkt von reinweißer Farbe umgewandelt.

## Patentansprüche

1. Verfahren zur Gewinnung von fremdstoflfreien, farb- und geruchlosen Polyolefinen aus polyolefinhaltigen Kunststoff-Gemischen oder polyolefinhaltigen Abfällen, dadurch gekennzeichnet, daß diese Gemische oder Abfälle in einer ersten Verfahrensstufe mittels einer oberhalb 90 °C siedenden Kohlenwasserstofffraktion des Benzin- oder Dieselkraftstoffbereiches unter Erwärmen auf Temperaturen zwischen 90 °C und dem Siedebereich dieser Kohlenwasserstofffraktion extrahiert werden, in einer zweiten Verfahrensstufe die entstandene heiße primäre Polyolefinlösung nach Abtrennung vom Extraktionsrückstand mit Bleicherde und/oder Aktivkohle in intensiven Kontakt gebracht und nach Entfernung der mit adsorbierten Fremdbestandteilen der Polyolefinlösung behafteten Bleicherde- und/oder Aktivkohlerückstände in einer dritten Verfahrensstufe auf Temperaturen unter 70 °C gekühlt und danach das dabei auskristallisierte Polyolefin isoliert wird.

2. Verfahren nach Anspruch 1, dadurch gekennzeichnet, daß die nach Anspruch 1 durch Extraktion gewonnene primäre Lösung zunächst ohne Bleichmittelbehandlung gekühlt und aufgetrennt wird, danach der dabei gewonnene Polyolefinniederschlag erneut unter Erwärmen auf Temperaturen oberhalb 90 °C in der Kohlenwasserstofffraktion gelöst und diese sekundäre Lösung mittels Bleicherde und/oder Aktivkohle extraktiv behandelt, nach Abtrennung des fremdstoffbehafteten Adsorbens auf Temperaturen unter 70 °C abgekühlt und anschließend das auskristallisierte Polyolefin abgetrennt wird.

3. Verfahren nach Anspruch 1 und 2, dadurch gekennzeichnet, daß die Behandlung nach Anspruch 2 ein- oder mehrfach wiederholt wird.

4. Verfahren nach Anspruch 1 bis 3, dadurch gekennzeichnet, daß die Polyolefinlösung nach der Bleicherde- und/oder Aktivkohlebehandlung auf Temperaturen zwischen 10 und 30 °C gekühlt wird

5. Verfahren nach Anspruch 1 bis 4, dadurch gekennzeichnet, daß der nach der Behandlung der Lösung mit Bleicherde und/oder Aktivkohle durch Abkühlung und Abtrennung gewonnene Polyolefinniederschlag durch Erwärmen auf Temperaturen oberhalb des Schmelzpunktes des Polyolefins vom anhaftenden Lösungsmittel befreit und das Polyolefin aus der Schmelze heraus konfektioniert wird.

6. Verfahren nach Anspruch 1 bis 4, dadurch gekennzeichnet, daß der nach der Behandlung der Lösung mit Bleicherde und/oder Aktivkohle durch Abkühlung und Abtrennung gewonnene Polyolefinniederschlag durch Trocknung bei Temperaturen unterhalb des Schmelzpunktes des Polyolefins vom anhaftenden Lösungsmittel befreit und das Polyolefin als feinkristallines Pulver gewonnen wird.

7. Verfahren nach Anspruch 1 bis 4 und 6, dadurch gekennzeichnet, daß die Entfernung des dem Polyolefinniederschlag anhaftenden Lösungsmittels durch Verdampfen im Vakuum erfolgt.

8. Verfahren nach Anspruch 1 bis 4 und 6, dadurch gekennzeichnet, daß die Entfernung des dem Polyolefinniederschlag anhaftenden Lösungsmittels durch Hindurchleiten eines Gasstromes durch den Polyolefinniederschlag erfolgt.

9. Verfahren nach Anspruch 1 bis 4 und 6 bis 8, dadurch gekennzeichnet, daß im Polyolefin noch vorhandene Reste der als Lösungsmittel verwendeten Kohlenwasserstofffraktion sowie gegebenenfalls in das Polyolefin mitgeschleppte Anteile von keton- oder alkohollöslichen Fremdstoffen durch Extraktion des Pulvers mit einem unterhalb des Schmelzpunktes des Polyolefins siedenden Keton oder Alkohol entfernt werden.

10. Verfahren nach Anspruch 1 bis 9, dadurch gekennzeichnet, daß das polyolefinhaltige Ausgangsmaterial vor der extraktiven Wärmehandlung nach Anspruch 1 einer Vorwäsche mit der Kohlenwasserstofffraktion bei Temperaturen zwischen 10 und 70 °C unterworfen und das gewaschene Material von dem verunreinigten Lösungsmittel abgetrennt wird.

11. Verfahren nach Anspruch 1, 2 und 10, dadurch gekennzeichnet, daß das Lösungsmittel im Gegenstrom gefahren wird, beginnend mit frischem Lösungsmittel bei der Behandlung nach Anspruch 2 bis zur Vorwäsche nach Anspruch 8.
